# EUROPÄISCHE PATENTSCHRIFT

(11) **EP 2 550 239 B1**
(45) Veröffentlichungstag und Bekanntmachung des Hinweises auf die Patenterteilung: **07.06.2017**
(21) Anmeldenummer: 11709435.9
(22) Anmeldetag: 23.03.2011
(51) Int. Cl.: C01G 37/033, C09C 1/34, C01G 37/00

(54) **VERFAHREN ZUR HERSTELLUNG VON CHROM(III)-OXID**
METHOD FOR PRODUCING CHROMIUM (III) OXIDE
PROCÉDÉ DE FABRICATION D'OXYDE DE CHROME (III)

(30) Priorität: 08.12.2010 EP 10194157; 23.03.2010 EP 10157422
(43) Veröffentlichungstag der Anmeldung: 30.01.2013
(73) Patentinhaber: LANXESS Deutschland GmbH, 50569 Köln (DE)
(72) Erfinder: FRIEDRICH, Holger, 2940 Newcastle (ZA); ORTMANN, Rainer, 50859 Köln (DE); STENGER, Matthias, 40789 Monheim (DE); BOLL, Matthias, 51061 Köln (DE)
(86) Internationale Anmeldenummer: PCT/EP2011/054407
(87) Internationale Veröffentlichungsnummer: WO 2011/117274

(56) Entgegenhaltungen:
- EP-A1- 0 308 175
- DATABASE WPI Week 200951 Thomson Scientific, London, GB; AN 2009-L61883 XP002586988, BAI Y; LI P; LI Z; XU H; ZHANG Y: "Preparation of pigment grade chrome oxide green by heating chromium salt in presence of reducing gas, cooling to room temperature, washing with water, mixing with additive, activating and sintering, washing, and drying", -& CN 101 475 217 A ((PROC-N) INST PROCESS ENG CHINESE ACAD SCI) 8. Juli 2009 (2009-07-08)

## Beschreibung

Die Erfindung betrifft ein Verfahren zur Herstellung von Chrom(III)-oxid ausgehend von Alkalimetallchromaten und gasförmigem Ammoniak. Chrom(III)-oxid ist ein vielseitiges Produkt mit einer breiten Anwendungspalette. So kann es als Pigment zum Einfärben von unterschiedlichen Anwendungsmedien, wie beispielsweise Baustoffen, Kunststoffen, Farben & Lacken, Gläsern oder Keramiken verwendet werden. Für dieses Anwendungsgebiet ist ein möglichst niedriger Gehalt an wasserlöslichen Verunreinigungen gefordert.

Darüber hinaus wird Chrom(III)-oxid auch in Schleifmitteln und hochtemperaturbeständigen Werkstoffen verwendet. Für den Einsatz von Chrom(III)-oxid in hochtemperaturbeständigen Werkstoffen ist ein möglichst niedriger Alkalimetall-Gehalt gewünscht, um die bei hohen Temperaturen und der Anwesenheit von Alkalimetall-Ionen begünstigte Oxidation von Cr(III) zu Alkalimetallchromat so weit als möglich zu unterdrücken.

Ein weiteres wichtiges industrielles Einsatzgebiet für Chrom(III)-oxid ist die Verwendung als Ausgangsmaterial für die Herstellung von Chrommetall und/oder chromhaltigen Hochleistungslegierungen. Hier können in aller Regel nur Chrom(III)-oxide eingesetzt werden, die sich durch einen niedrigen Schwefel-Gehalt und einen niedrigen Kohlenstoff-Gehalt auszeichnen. Der Begriff "schwefelarmes Chrom(III)-oxid" wird daher häufig als Synonym für "Chrom(III)-oxid für metallurgische Zwecke" verwendet.

Chrom(III)-oxid kann nach dem Stand der Technik mit verschiedenen Verfahren hergestellt werden. Meist wird es bei höheren Temperaturen aus sechswertigen Chromverbindungen hergestellt, wobei unterschiedliche Reinheitsgrade erreicht werden können. Als Ausgangsverbindungen des sechswertigen Chroms werden Chromsäure, Ammoniumchromate oder Alkalichromate verwendet. Die Reaktion kann mit oder ohne Zusatz eines Reduktionsmittels durchgeführt werden. Als Reduktionsmittel dienen organische oder anorganische Reduktionsmittel wie Sägespäne, Melasse, Celluloseablaugen, Acetylen, Methan, Schwefel und dessen Verbindungen, Phosphor, Kohlenstoff, Wasserstoff und dergleichen. Derartige Verfahren sind in zahlreichen Schutzrechten beschrieben. Beispielhaft seien dazu nur die US 1,893,761 und DE-A-20 30 510 erwähnt. Die US 1,893,761 offenbart die Herstellung von Chrom(III)-oxid durch die Reduktion von Alkalimetallchromaten mit organischen Substanzen. Bei der Verwendung von Kohlenstoff oder organischen Verbindungen als Reduktionsmittel kann der Prozess so geführt werden, dass schließlich Natriumcarbonat als Nebenprodukt erhalten wird, wie bereits in US 1,893,761 erwähnt. Dieses kann gegebenenfalls in den Produktionsprozess von Natriumdichromat zurückgeführt werden, wenn das Natriumdichromat über einen oxidativen alkalischen Aufschluss ausgehend von Chromerz hergestellt wird. Allerdings enthält das auf diese Weise erhaltene Chrom(III)-oxid einen hohen Kohlenstoff-Anteil, der es für die metallurgische Anwendung ungeeignet macht. Die DE-A-20 30 510 beschreibt ein Verfahren zur kontinuierlichen Herstellung von sehr reinem, schwefelarmem Chrom(III)-oxid, durch Reduktion von Alkalichromaten mit Wasserstoff bei höheren Temperaturen sowie eine dafür geeignete Vorrichtung. Die Reaktionstemperatur beträgt zwischen 1000-1800 °C, vorteilhafterweise zwischen 1100-1400 °C, und das erhaltene Produkt wird mit Hilfe einer alkalisch eingestellten Dispersion vom Abgas getrennt. Die DE-A-24 16 203 und die US 4,052,225 beschreiben Verfahren bei denen ebenfalls Wasserstoff für die Reduktion von Alkalimetallchromaten eingesetzt wird. Bei beiden Verfahren wird das Alkalimetallchromat in feiner Verteilung in einer beheizten wasserstoffhaltigen Reaktionszone bei Temperaturen zwischen 900 und 1600 °C reduziert, wobei man die Reduktion auch in Gegenwart eines Gases, das bei der Reduktion der Alkalichromate die Alkalimetallionen unter Salzbildung bindet und wobei man das gebildete Chrom(III)-oxid in Form einer alkalisch eingestellten Dispersion abscheidet. Als salzbildende Gase werden vorzugsweise Chlor oder Chlorwasserstoffe eingesetzt, wodurch sich Natriumchlorid bildet. Da der Schmelzpunkt von Natriumchlorid jedoch bei 800 °C liegt, ist ein Aufschmelzen im Reaktor zu erwarten, wodurch sich bei längeren Kampagnen Klumpen und Anbackungen bilden werden.

Nachteilig bei all diesen Verfahren, die mit einem Reduktionsmittel arbeiten, ist, dass durch den Einsatz des Reduktionsmittels zwangsläufig ein Nebenprodukt anfällt, das aufgearbeitet werden muss.

Die thermische Zersetzung von reinem Ammoniumdichromat führt dagegen selbst zu keinem nennenswerten Zwangsanfall eines Nebenproduktes, da sie im Idealfall nach der Reaktionsgleichung

(NH₄)₂Cr₂O₇ → Cr₂O₃ + N₂ + 4 H₂O (1)

verläuft und ab einer Temperatur von ca. 200 °C abläuft. Allerdings gehen die heute praktizierten technischen Verfahren zur Herstellung von Ammoniumdichromat von Alkalidichromaten - meist Natriumdichromat - aus. Dabei wird das Natriumdichromat mit Ammoniumchlorid oder Ammoniumsulfat zum Ammoniumdichromat und Natriumchlorid beziehungsweise zum Ammoniumdichromat und Natriumsulfat umgesetzt. Chrom(III)-oxid für metallurgische Zwecke wurde früher industriell hergestellt, indem man in einem Ofen eine Mischung aus Ammoniumdichromat und Natriumchlorid kalzinierte, die durch in-situ-Reaktion von Natriumdichromat und Ammoniumchlorid in praktisch stöchiometrisch äquivalenten Mengen erhalten wurde. Die Kalzinierungstemperatur sollte über 700 °C liegen, um sicherzustellen, dass das Reaktionsgemisch einen hohen Chrom(III)-oxid-Anteil aufweist; bei einer zu hohen Temperatur erhöht sich allerdings das Risiko der Schlackenbildung im Ofen, und die Temperatur wird daher im allgemeinen unter 850 °C gehalten.

Die Verwendung von Ammoniumsulfat anstelle von Ammoniumchlorid ist häufig bevorzugt, da das Ammoniumchlorid aufgrund seiner niedrigen Sublimationstemperatur bei der Kalzinierung als NH₃ und HCl absublimiert und so in die Abluft gelangen kann. Aus diesem Grunde hat der Einsatz von Ammoniumchlorid heute keine wirtschaftliche Bedeutung mehr. Der Nachteil des Einsatzes von Ammoniumsulfat liegt allerdings darin, dass auf diese Weise Schwefel in den Produktionsprozess eingeschleppt wird, obwohl ein Chrom(III)-oxid mit möglichst niedrigem Schwefel-Gehalt gewünscht ist.

In der DE-A-26 35 086 (US-A-4235862) ist ein Verfahren zur Herstellung eines schwefelarmen Chrom(III)-oxides offenbart, das durch Glühen eines Gemisches von Alkalidichromat und Ammoniumsulfat bei einer Kalziniertemperatur von 800 bis 1100 °C und Abtrennen des gebildeten Chrom(III)-oxides von gebildetem Alkalisalz gekennzeichnet ist, wobei pro Mol Alkalichromat 0.7 bis 0.89, vorzugsweise 0.7 bis 0.84 Mol Ammoniumsulfat eingesetzt werden. Die Aufarbeitung des Chrom(III)-oxids nach der Glühung erfolgt in konventioneller Weise durch Auswaschen von wasserlöslichen Salzen und Trocknen. Nach diesem Verfahren können Schwefelgehalte im Chrom(III)-oxid von 50 bis 100 ppm erreicht werden. Nachteilig bei diesem Verfahren ist, dass zur Erzielung niedriger Schwefelgehalte die Ausgangssubstanzen nicht im stöchiometrischen Verhältnis gemischt werden dürfen und Ammoniumsulfat im deutlichen Unterschuss eingesetzt wird. Daraus resultieren niedrige Umsätze im Bereich von ca. 90 % und die Einhaltung einer hohen Glühtemperatur ist erforderlich. Das aufgrund des Überschusses vorhandene Alkalidichromat zersetzt sich thermisch zu Alkalichromat, Chrom(III)-oxid und Sauerstoff. Somit entsteht bei der Reaktion neben einer großen Mengen Alkalisulfat (zum Beispiel Natriumsulfat) auch immer Alkalichromat (zum Beispiel Natriumchromat), welches beim späteren Auswaschen in die Mutterlauge oder Waschflüssigkeit gelangt und dann abgetrennt werden muss, um es gegebenenfalls in den Prozess zurückzuführen. Die Mutterlauge enthält dann aber auch den Zwangsanfall an Alkalisulfat, der aufwendig gereinigt werden muss, da er stets mit Alkalichromat verunreinigt ist. Außerdem haben sich in der Praxis die zur Herstellung von schwefelarmem Chrom(III)-oxid vorgeschlagenen Bedingungen als schwierig durchführbar erwiesen, da der Natriumsulfatgehalt der Reaktionsmischung bei den erforderlichen hohen Temperaturen zu Zusammenbackungen führt (Schmelztemperatur von Natriumsulfat ca. 885 °C) und damit zu Störungen im Produktionsablauf.

Zur Herstellung von Chrom(III)-oxid mit niedrigeren Schwefel-Gehalten offenbart die US 4,296,076 ein Verfahren, bei dem unter anderem Natriumdichromat und Ammoniumchlorid beziehungsweise Natriumdichromat und Ammoniumsulfat eingesetzt werden. Im Gegensatz zur DE-A-26 35 086 wird dabei im Wesentlichen ein stöchiometrisches Verhältnis gewählt oder vorzugsweise ein Überschuss der Ammoniumverbindung eingesetzt. In einem ersten Reaktionsschritt werden die Ausgangsverbindungen zu Ammoniumdichromat und Natriumchlorid beziehungsweise Ammoniumdichromat und Natriumsulfat umgesetzt. In den offenbarten Beispielen findet dieser Reaktionsschritt bei 400 bis 800 °C statt, anschließend die wässrige Aufarbeitung und dann noch ein zweiter Glühprozess bei einer Temperatur über 1100 °C. Nach diesem Verfahren werden Schwefel-Gehalte im Chrom(III)-oxid von unter 40 ppm erreicht. Bei diesem Verfahren fallen allerdings große Mengen Natriumchlorid beziehungsweise Natriumsulfat an, die aufwendig gereinigt werden müssen. Außerdem ist der Einsatz der genannten Ammoniumverbindungen, insbesondere von Ammoniumchlorid, nicht unproblematisch, weil sie sehr leicht sublimieren und somit in die Abgasluft gelangen können.

Ein anderes im Stand der Technik beschriebenes Verfahren zur Herstellung von qualitativ hochwertigem Chrom(III)-oxid wird in RU 2 258 039 offenbart. Zwar wird auch hier Ammoniumdichromat - gewonnen durch Umsetzung von Natriumdichromat mit Ammoniumsulfat in wässriger Phase - für die Herstellung von Chrom(III)-oxid eingesetzt, allerdings wird das bei der Umsetzung zwangsweise anfallende Natriumsulfat aus dem Reaktionsgemisch abgetrennt, so dass ein relativ reines, das heißt schwefelarmes, Ammoniumdichromat thermisch zum Chrom(III)-oxid zersetzt wird. Es fällt stets Natriumsulfat als Nebenprodukt an, das aufwändig gereinigt werden muss, da es mit Cr(VI) verunreinigt ist.

Die thermische Zersetzung von reiner Chromsäure (2) ist unter anderem in der Literatur als Reaktion beschrieben (zum Beispiel Ullmann's Encyclopedia of Industrial Chemistry, Vol. A7, Seite 87, VCH Verlag, 1986)

4 CrO₃ → 2 Cr₂O₃ + 3 O₂ (2)

Auch im Fall von Chromsäure als Ausgangsmaterial zur Herstellung von Chrom(III)-oxid werden in der Regel in einem ersten Schritt Alkalichromate mit Schwefelsäure und/oder hydrogensulfathaltigen Verbindungen zu Alkalidichromaten umgesetzt (3) und danach mit weiterer Schwefelsäure in Chromsäure überführt (4).

2 Na₂CrO₄ + H₂SO₄ → Na₂Cr₂O₇ + Na₂SO₄ + H₂O (3)

Na₂Cr₂O₇ + H₂SO₄ → 2 CrO₃ + Na₂SO₄ + H₂O (4)

Folglich fallen auch bei diesen Verfahren zur Herstellung von Chrom(III)-oxid erhebliche Mengen an Alkalisulfaten, zum Beispiel Natriumsulfat, als Nebenprodukte an. Bei dem erwähnten Verfahren, der thermischen Zersetzung von reiner Chromsäure ausgehend von Natriumchromat entstehen pro Kilogramm Chrom(III)-oxid circa 1.9 kg Natriumsulfat (Kombination aus (3), (4) und (2)). Das Natriumsulfat ist stets mit Natriumchromat verunreinigt, so dass es von minderer Qualität ist und vor einer Vermarktung erst noch aufwendig gereinigt werden muss. Außerdem ist Chromsäure ein sehr starkes Oxidationsmittel und eine extrem korrosiv wirkende Verbindung. Ihre Handhabung in technischen Prozessen bei höheren Temperaturen ist entsprechend schwierig.

Zur Herstellung von schwefelarmem Chrom(III)-oxid sind auch andere Verfahren beschrieben, bei denen weitgehend schwefel- und kohlenstofffreie Ausgangsstoffe eingesetzt werden.

In DE-A-28 52 198 (US-A-4230677) erfolgt die Herstellung von Ammoniummonochromat durch Umsetzung von Natriumdichromat oder Natriummonochromat mittels einer Lösungsmittelextraktion aus einem organischen Lösungsmittel. Die anschließende Kalzinierung zu Chrom(III)-oxid erfolgt bei 500 °C. Nachteil dieser Methode ist, dass mit sehr stark verdünnten wässrigen Lösungen gearbeitet wird. So liegt die Konzentration des Chroms - gerechnet als Cr₂O₃ - in der zu extrahierenden wässrigen Lösung im Bereich von 1 g/l bis 25 g/l, wobei als besonders bevorzugte Konzentration 8.2 g/l angegeben ist. Auch in der organischen Phase kann nach zwei Extraktionsstufen nur eine Cr₂O₃-Konzentration von 10 g/l erreicht werden. Dadurch müssen sehr große Flüssigkeitsmengen gehandhabt, wiederaufgearbeitet und im Kreislauf geführt werden. Als organische Lösungsmittel werden Benzol, Xylol oder Toluol allein oder gemischt mit einem isoparaffinischen Kohlenwasserstoff eingesetzt. Bei allen diesen Stoffen handelt es sich um Gefahrstoffe, da sie leichtentzündlich sind, so dass bei Ausübung dieses Verfahrens umfangreiche Maßnahmen zum Schutz der Mitarbeiter und der Umwelt getroffen werden müssen. Des Weiteren findet die Extraktion bei einem pH-Wert zwischen 1 und 2, statt, wofür Salzsäure verwendet wird. Dadurch entsteht eine nicht unerhebliche Menge an Natriumchlorid, die das Abwasser belastet. Die eingesetzten organischen Lösungsmittel weisen alle eine merkliche Wasserlöslichkeit auf (Löslichkeiten bei 20 °C in Wasser: Benzol 1.77 g/l, Toluol 0.47 g/l, Xylol 0.2 g/l), so dass das Abwasser zusätzlich eine hohe Fracht an organischen Verbindungen mit sich führt und aufwendig gereinigt werden muss. Aufgrund seiner zahlreichen Nachteile hat dieses Verfahren bisher keine wirtschaftliche Bedeutung erlangt.

Die thermische Behandlung von Natriumdichromat bei höheren Temperaturen führt auch ohne Anwesenheit eines Reduktionsmittels zu Chrom(III)-oxid. So zersetzt sich Na₂Cr₂O₇*2H₂O nach den Untersuchungen von S. Sampath et al. (Thermochimica Acta, 159 (1990), S. 327-335) ab einer Temperatur von 500 °C langsam zu Na₂CrO₄ und Cr₂O₃.

4 Na₂Cr₂O₇*2H₂O → 4 Na₂CrO₄ + 2 Cr₂O₃ + 3 O₂ + 8 H₂O (5)

Gemäß der chemischen Reaktionsgleichung werden im Idealfall maximal 50 mol-% des eingesetzten Cr(VI) in Chrom(III)-oxid überführt. Während des Aufheizvorgangs erfolgt bei 83 °C zuerst der Übergang von kristallwasserhaltigem Natriumdichromat zur wasserfreien Verbindung. Das kristallwasserfreie Natriumdichromat schmilzt bei 357 °C, so dass die Zersetzung in der Schmelze stattfindet. Dadurch wird der Umsetzungsgrad bei der Reaktion nochmals deutlich erniedrigt. Die Reaktionsgeschwindigkeit ist bei 500 °C noch sehr niedrig, so dass höhere Temperaturen angewendet werden müssen, um akzeptable Reaktionsgeschwindigkeiten zu erreichen. So werden beispielsweise bei der Zersetzung von wasserfreiem Natriumdichromat bei 750 °C nur ca. 25 mol-% Cr(VI) in Cr₂O₃ überführt. Durch die geringe Ausbeute wird dieses Verfahren für die Herstellung von Chrom(III)-oxid im technischen Maßstab uninteressant.

In CN-A-1310132 erfolgt die Herstellung von Ammoniumchromat durch Umsetzung von Natriumchromat in Gegenwart von Kohlendioxid und Ammoniak. Das nach diesem Verfahren hergestellte Ammoniumchromat soll für die Herstellung von Chrom(III)-oxid eingesetzt werden können. Das offenbarte Verfahren zur Herstellung von Ammoniumchromat weist jedoch mehrere Nachteile auf. Zum einen muss die eingesetzte Natriumchromat-Lösung zu Beginn umkristallisiert und filtriert werden. Es ist also ein - nur unvollständig beschriebener - Reinigungsschritt erforderlich, bei dem Natriumchlorid als Nebenprodukt anfällt. Zum anderen erfolgt die Umsetzung mit Kohlendioxid und Ammoniak in zwei Verfahrensschritten, bei denen jeweils Kohlendioxid und Ammoniak zugesetzt werden. Die Abtrennung des nach der ersten Umsetzung gebildeten Natriumhydrogencarbonats erfolgt durch Kühlkristallisation, wobei die Abkühlrate bei 1 °C/h bis 4 °C/h liegt. Dadurch ist die Kristallisation ein sehr langsamer und zeitintensiver Prozess, zumal in allen offenbarten Beispielen vor der Filtration auch noch ein zweistündiger Alterungsschritt stattfindet. Die Bedingungen unter denen aus dem erhaltenen Ammoniumchromat Chrom(III)-oxid hergestellt werden soll, werden in CN-A-1310132 jedoch nicht offenbart.

Der Einsatz von reinem Ammoniumchromat oder Ammoniumdichromat für die thermische Zersetzung zur Herstellung von reinem Chrom(III)-oxid ist generell nicht unkritisch, da die Zersetzung im trockenen Zustand explosionsartig erfolgen kann. Ammoniumdichromat ist daher auch als Gefahrstoff mit den Gefahrensymbol "E" (explosiv) eingestuft. Die Zersetzungsreaktion ist deswegen schwer beherrschbar. Das aus dieser Reaktion erhaltene Cr₂O₃-Zersetzungsprodukt zeichnet sich durch ein extrem niedriges Schüttgewicht aus, das im Bereich vom 0.1 bis 0.2 g/cm³ liegen kann. Dadurch neigt das erhaltene Cr₂O₃-Zersetzungsprodukt sehr stark zum Stauben. In einem technischen Prozess muss die Abluft von einer großen Menge Staub gereinigt werden. Der Staub enthält außerdem noch nicht umgesetzte Anteile an Cr(VI).

In CN-A-1418822 wird die gleichzeitige Herstellung von Alkalimetalldichromaten und Chrom(III)-oxid offenbart, welche dadurch gekennzeichnet ist, dass ein Alkalimetallchromat mit Ammoniumchromat oder Ammoniumdichromat im molaren Verhältnis von Alkalimetallchromat : Ammoniumchromat oder Ammoniumdichromat = (0.3 - 3) : 1 gemischt wird und die Mischung im Temperaturbereich von 650 °C bis 1200 °C für 0.5 bis 3 Stunden geglüht wird. Das geglühte Produkt wird in Wasser gelöst. Nach einer Fest/Flüssig-Trennung besteht der feste Rückstand aus schwefelarmem Chrom(III)-oxid. Aus der aufkonzentrierten Mutterlauge wird durch Abkühlung Alkalimetalldichromat auskristallisiert. Das feste Alkalimetalldichromat wird über eine Fest/Flüssig-Trennung von nicht abreagiertem Alkalimetallchromat abgetrennt. In den offenbarten Beispielen werden Mischungen aus Natriumchromat (Na₂CrO₄*4H₂O) und Ammoniumchromat, Natriumchromat (Na₂CrO₄) und Ammoniumdichromat, Kaliumchromat (K₂CrO₄) und Ammoniumchromat sowie Kaliumchromat (K₂CrO₄) und Ammoniumdichromat eingesetzt. Die Ausbeute an Chrom(III)-oxid in Bezug auf das in den Ausgangsmischungen vorhandene Cr(VI) schwankt bei den Beispielen 1 bis 3 zwischen 36 und 40 %. Außerdem ist das Reaktionsprodukt, wie es zum Beispiel aus den Beispielen 1 und 2 erhalten wird, sehr klebrig. Dadurch wird eine technische Realisierung beispielsweise über einen Drehrohrofen sehr schwierig.

Aus CN 1418821 ist bekannt, dass man schwefelfreies Chromoxid durch Kalzinierung bei 650 - 1200 °C von einem 1 : 1 Ammoniumchromat-Alkalimetall-Doppelsalz erhalten kann. Der Nachteil bei dem dort beschriebenen Verfahren ist jedoch, dass die Ausbeute an Chromoxid lediglich um die 23 % in Bezug auf das in der Ausgangsverbindung enthaltene Cr(VI) beträgt und das Verfahren somit keine wirtschaftliche Methode zur Gewinnung von Chromoxid darstellt. Ein weiterer Nachteil ist, dass der Na-Anteil - gerechnet als Na-Metall - im erhaltenen Chromoxid mit 1900 ppm sehr hoch ist. Außerdem erweist sich die Reaktionsmischung ab einer Temperatur von ca. 700 °C, bei der die Kalzinierung stattfindet, als sehr klebrig, womit insbesondere eine technische Realisierung beispielsweise über einen Drehrohrofen sehr schwierig ist.

Die GB 748,610 beschreibt allgemein die Reduktion von Alkalimetallchromaten mit Wasserstoff und anschließender Umsetzung zu Cr₂O₃. Die Ausbeuten bei einer derartigen Reduktion sind allerdings sehr niedrig. So beträgt die Ausbeute an Cr₂O₃ ausgehend von Alkali-freiem Natriummonochromat weniger als 67%, was dieses Verfahren für die Umsetzung mit so reaktiven Ausgangsstoffen in einen technischen Maßstab uninteressant macht.

Die CN 1907865A offenbart ein Verfahren zur Herstellung von Chromoxid, wobei man ein Chromatsalz als Ausgangsstoff und ein reduzierendes Gas wie Wasserstoff, Erdgas, Kohlengas oder deren Gemische als Reduktionsmittel bei 300-850 °C für 0.5 bis 3 Stunden reagieren lässt. Nach dem Abkühlen wird das Reaktionsgemisch mit Wasser gewaschen und nach dem Trocknen bei 400-1100 °C für 1 bis 3 Stunden kalziniert. Das in CN 1907865A, insbesondere Beispiel 1, beschriebene Verfahren, ausgehend von Chromat und Wasserstoff gleicht damit dem in GB 748,610 offenbarten Verfahren, wobei eine Nacharbeitung dieses Beispiels unter den genannten Bedingungen weder zu einer Exothermie noch zu einer messbaren Umsetzung führte.

In CN-101475217 erfolgt die Herstellung von pigmentärem Chromoxid durch Umsetzung von Natriumdichromat mit Ammoniak bei 350°C anschließender Hydrolyse, Isolierung des Zwischenproduktes und nachfolgender Kalzinierung in Gegenwart von oxidischen Zusätzen bei 1100°C. Die Ausbeute des nach diesem Verfahren erhaltenen Chromoxids, mit entsprechenden oxidischen Nebenprodukten ist jedoch mit weniger als 45% sehr gering und damit technisch uninteressant (vgl. Vergleichsbeispiel 2).

Polyak und Devyatovskaya beschrieben bereits 1957 Laborversuche zur Umsetzung von Natriummonochromat und Natriumdichromat mit gasförmigem Ammoniak (Trudy Ural. Nauch.-Issledovatel Khim. Inst. 4, 1957, Seite 30-32). Nach ihren Untersuchungen können Natriummonochromat und Natriumdichromat erst bei einer Temperatur von 700°C mit gasförmigem Ammoniak zu Natriumchromit NaCrO₂ reduziert werden. Die Hydrolyse des Natriumchromits wird als schwierig beschrieben und eine weitere Aufarbeitung zum Chromoxid wird von den Autoren nicht erwähnt.

Die Aufgabe der Erfindung lag darin, ein Verfahren zur Herstellung von Chromoxid zu finden, das wirtschaftlich besser nutzbar ist und zudem ein Chromoxid hervorbringt, das für metallurgische Zwecke einsetzbar ist, also insbesondere einen geringen Schwefelgehalt und Alkalimetallgehalt, insbesondere Natrium-Gehalt, sowie möglichst wenige Nebenprodukte besitzt. Überraschenderweise konnte gefunden werden, dass gasförmiger Ammoniak als Reaktant für Alkalimetallchromate eingesetzt werden kann und auf diese Weise die Herstellung von Chrom(III)-oxid über Alkalimetallchromit möglich ist. Die Erfindung betrifft daher ein Verfahren zur Herstellung von Chrom(III)-oxid, enthaltend die Schritte:
a) Umsetzung von Alkalimetallchromat mit gasförmigem Ammoniak, insbesondere bei einer Temperatur von 200 bis 800 °C,
b) Hydrolyse des nach Schritt a) erhaltenen Reaktionsproduktes, wobei man den pH-Wert
   - des Wassers zur Hydrolyse vor der Hydrolyse oder
   - der alkalischen Mutterlauge während oder nach der Hydrolyse auf einen Wert von 4 bis 11, vorzugsweise von 5 bis 10,
   mittels einer Säure erniedrigt,
c) Abtrennung des nach Schritt b) ausgefallenen Hydrolyseproduktes, vorzugsweise bei einem pH-Wert von 4 bis 11, insbesondere von 5 bis 10, und gegebenenfalls Waschen und gegebenenfalls Trocknen und
d) Kalzinieren des nach Schritt c) erhaltenen Hydrolyseproduktes bei einer Temperatur von 700 bis 1400 °C, insbesondere von 800 bis 1300 °C.

### Schritt a)

Als Ausgangsmaterial für die Herstellung von Chrom(III)-oxid können sämtlich Alkalimetallchromate eingesetzt werden. Dabei ist es unerheblich, ob die Alkalimetallchromate als Monochromate, Dichromate, Trichromate, und so weiter oder als Polychromate eingesetzt werden. Des Weiteren ist es unerheblich, ob die Alkalimetallchromate als wasserfreie Verbindungen oder in Form ihrer Hydrate eingesetzt werden. Bevorzugt ist das Alkalimetallchromat Natriumdichromat, Natriumdichromat Dihydrat oder Kaliumdichromat, besonders bevorzugt Natriumdichromat und Natriumdichromat Dihydrat. Der Begriff "Alkalimetallchromate" im Sinne dieser Erfindung umfasst auch die Gruppe der sogenannten Alkalimetallchromichromate, bei denen Chrom nicht nur in der Oxidationsstufe +VI (in Form von Chromat) auftritt, sondern gleichzeitig auch in der der Oxidationsstufe +III. Als Beispiel für ein derartiges Alkalimetallchromichromat sei hier beispielsweise NaCr₃O das auch mit der Summenformel NaCr(CrO₄)₂ beschrieben werden kann. Das Alkalimetallchromat kann entweder als Lösung, insbesondere als wässrige Lösung, oder als Suspension oder als Feststoff eingesetzt werden. Für das erfindungsgemäße Verfahren werden besonders bevorzugt Feststoffe eingesetzt, wobei diese vorzugsweise eine Restfeuchte von kleiner 4.0 Gew.-%, besonders bevorzugt von kleiner 2.0 Gew.-% besitzen. Ebenfalls bevorzugt besitzt das eingesetzte Alkalichromat einen Gehalt von Alkalihydroxid von kleiner als 2 Gew.-%, besonders bevorzugt von kleiner 1 Gew.-% insbesondere kleiner 0.5 Gew.-%.

Das im Schritt a) eingesetzte Alkalimetallchromat muss nicht notwendigerweise in reiner Form eingesetzt werden. Es kann vorteilhafterweise auch in Form einer Mischung eingesetzt werden. So sind beispielsweise Mischungen aus Alkalimetallmonochromaten und Chrom(III)oxid besonders vorteilhaft. Solche Mischungen können synthetisch durch Mischen der beiden Komponenten hergestellt werden, sie können aber auch auf dem Weg einer Festkörperreaktion ausgehend von Alkalimetallchromit und Alkalimetalldichromat hergestellt werden. Bevorzugte Mischungen enthalten Alkalimetallmonochromate und Chrom(III)oxid beispielsweise in einem Verhältnis von 99:1 bis 1:99, bevorzugt 90:10 bis 10:90, besonders bevorzugt 40:60 bis 60:40 bezogen auf den in den Verbindungen enthaltenes Chrom(III) bzw (Chrom (VI) bzw. werden durch Festkörperreaktion in vorgenannten Mengenverhältnissen erhalten. Die Festkörperreaktion zwischen Alkalimetallchromit und Alkalimetalldichromat findet vorzugsweise bei einer Temperatur von oberhalb 300 °C, vorzugsweise bei 300°C bis 500°C statt.

Die Reaktion des Alkalimetallchromates mit gasförmigem Ammoniak erfolgt vorzugsweise bei einer Temperatur von 200 bis 800 °C, besonders bevorzugt von 200 bis 600°C, ganz besonders bevorzugt von 200 bis 500 °C. Dabei muss die Reaktion nicht notwendigerweise bei nur einer Temperatur ablaufen. Es hat sich als vorteilhaft erwiesen, wenn die Temperatur im Laufe der Reaktion erhöht wird. Vorzugsweise wird die Reaktion bei einer Temperatur von 200 bis 300 °C gestartet und diese Temperatur so lange gehalten, bis ein Temperaturanstieg beobachtet werden kann. Für die weitere Umsetzung kann die Temperatur dann erhöht werden, wobei diese Erhöhung kontinuierlich oder schrittweise erfolgen kann.

Die Reaktion des Alkalimetallchromates mit gasförmigem Ammoniak erfolgt vorzugsweise in einem indirekt beheizten Reaktor, insbesondere in einem Drehrohrofen oder in einer Wirbelschicht.

Die Reaktionszeit beträgt in der Regel 0.5 bis 10 Stunden und hängt u. a. von der Reaktionstemperatur, dem eingesetzten Alkalimetallchromat und der Größe der eingesetzten Alkalimetallchromatkristalle ab. Aus diesem Grunde kann es vorteilhaft sein, wenn das eingesetzte Alkalimetallchromat zerkleinert wird, bevor es dem Schritt a) zugeführt wird. Bevorzugt sind Teilchen kleiner 1000 µm, besonders bevorzug kleiner 500 µm, ganz besonders bevorzugt kleiner 300 µm,

Die Umsetzung des Alkalimetallchromates mit gasförmigem Ammoniak führt zur Bildung einer Zwischenverbindung, die bei den vorliegenden Temperaturen schließlich ein Alkalimetallchromit-Salz als Reaktionsprodukt liefert. Wie am Beispiel der Umsetzung von Natriumdichromat mit gasförmigem Ammoniak veranschaulicht werden soll, kann für die Gesamtreaktion von folgendem Brutto-Umsatz ausgegangen werden:

Na₂Cr₂O₇ + 2 NH₃ → Zwischenverbindung → 2 NaCrO₂ + 3 H₂O + N₂ (6)

Na₂Cr₂O₇*2H₂O + 2 NH₃ → Zwischenverbindung → 2 NaCrO₂ + 5 H₂O + N₂ (7)

Nachgewiesen werden kann die Zwischenverbindung indirekt durch den Temperaturverlauf, der bei der Reaktion beobachtet wird: Etwa 50 Minuten nach Einleiten des Ammoniaks bei einer Reaktorinnentemperatur von 220 °C steigt die Temperatur sprunghaft ohne erhöhte Wärmezufuhr von außen auf circa 370 °C an. Das gebildete Natriumchromit NaCrO₂ konnte anhand einer Röntgenpulveraufnahme aus einem der unten beschriebenen Beispiele im Reaktionsprodukt nachgewiesen werden.

Um einen möglichst vollständigen Umsatz bei der Reaktion zu gewährleisten, wird der gasförmige Ammoniak vorteilhafterweise nicht im exakten stöchiometrischen Verhältnis eingesetzt, wie in den beiden Gleichungen (6) und (7) angegeben, sondern im Überschuss. Bevorzugt beträgt der Ammoniak-Überschuß wenigstens 5%, besonders bevorzugt mindestens 10%, insbesondere 10 bis 30%, bezogen auf die stöchiometrische Menge.

Vorzugsweise wird die Umsetzung gemäß Schritt a) erst beendet, bis das Reaktionsprodukt bei der Hydrolyse mit der vierfachen Menge an Wasser, eine Suspension mit einem pH-Wert von mindestens 11, besonders bevorzugt von mindestens 12, ganz besonders bevorzugt von mindestens 13, ergibt. Zur Ermittlung des bevorzugten Endes der Umsetzung nimmt man vorzugsweise Proben aus der Umsetzung, unterwirft sie der Hydrolyse mit Wasser wie beschrieben und bestimmt den pH-Wert der erhaltenen Suspension.

Das nach dem Schritt a) erhaltene Reaktionsprodukt kann bevor es dem Schritt b) zugeführt wird noch zerkleinert werden, um eine möglichst rasche und vollständige Hydrolyse zu gewährleisten.

### Schritt b)

Das nach Schritt a) erhaltende Reaktionsprodukt wird mit Wasser hydrolysiert, wobei ein Niederschlag und eine Mutterlauge entstehen.

Die Hydrolyse kann bei Raumtemperatur oder auch bei erhöhten Temperaturen durchgeführt werden. Bei der Hydrolyse entsteht als Niederschlag Chrom(III)-hydroxid und/oder Chrom(III)-oxidhydroxid und Alkalilauge, so dass die entstehende Mutterlauge bei Verwendung von reinem Wasser einen sehr hohen pH-Wert aufweist. Die Hydrolyse am Beispiel von Natriumchromit NaCrO₂ kann formal durch die beiden folgenden Reaktionsgleichungen beschrieben werden:

NaCrO₂ + 2 H₂O → Cr(OH)₃ + NaOH (8)

NaCrO₂ + H₂O → CrO(OH) + NaOH (9)

Das dabei ausfallende Hydrolyseprodukt ist röntgenamorph, so dass seine exakte Strukturaufklärung bisher nicht möglich war. Bevorzugt wird bezogen auf das nach Schritt a) erhaltene Reaktionsprodukt wenigstens die gleiche Gewichtsmenge an Wasser zur Hydrolyse verwendet. Da allerdings die Viskosität der erhaltenen Suspension sehr hoch sein kann, ist es vorteilhaft, für die Hydrolyse wenigstens die doppelte Gewichtsmenge an Wasser, bezogen auf das nach Schritt a) erhaltene Reaktionsprodukt zu verwenden. Unabhängig von der genauen Struktur und Zusammensetzung ist das Hydrolyseprodukt bei Verwendung von reinem Wasser in einer stark alkalischen Mutterlauge suspendiert. Außerdem ist das Hydrolyseprodukt in der Regel sehr feinteilig, so dass die Fest-/Flüssig-Trennung mit unter schwierig und sehr zeitaufwändig sein kann. Die Filtrationseigenschaften und auch die Produktqualität (Reinheit, insbesondere Na-Gehalt) des schließlich erhaltenen Chrom(III)-oxides sowie dessen Ausbeute konnten im erfindungsgemäßen Verfahren verbessert werden. Bevorzugt erfolgt die pH-Wert-Erniedrigung bei einer Temperatur von 20 bis 100 °C, vorzugsweise von 40 bis 100 °C. Ganz besonders bevorzugt erfolgt die Erniedrigung des pH-Wertes während oder nach der Hydrolyse. In einer alternativen Ausführungsform kann bereits das Wasser, das zur Hydrolyse verwendet wird, einen erniedrigten pH-Wert aufweisen, der bevorzugt so gewählt ist, dass nach Hydrolyse ein pH-Wert von 4 bis 11, vorzugsweise von 5 bis 10 resultiert. Ganz besonders bevorzugt erfolgt eine pH-Erniedrigung vor der im Schritt c) stattfindenden Abtrennung des ausgefallenen Hydrolyseproduktes. Zur Erniedrigung des pH-Wertes werden vorzugsweise anorganische Säuren oder organische Säuren eingesetzt. Anorganische Säuren im Sinne dieser Erfindung umfassen auch in Wasser sauer reagierende Gase, wie beispielsweise Kohlendioxid. Diese sauer reagierenden Gase können entweder unter Normaldruck oder unter erhöhtem Druck in die Mutterlauge eingeleitet werden. Besonders bevorzugt werden organische Säuren, insbesondere organische niedermolekulare Säuren wie beispielsweise Ameisensäure oder Essigsäure, eingesetzt. Diese organischen Säuren haben den Vorteil, dass sie - falls Reste auf dem Hydrolyseprodukt verbleiben und die auch bei der Waschung im Schritt c) nicht entfernt werden können - bei der späteren Kalzinierung im Schritt d) durch Oxidation rückstandslos zersetzt werden und nicht als Verunreinigung im kalzinierten Produkt verbleiben.

Ganz besonders bevorzugt wird Kohlendioxid zur Einstellung des pH-Wertes eingesetzt, welches entweder unter Normaldruck oder unter erhöhtem Druck in die Mutterlauge eingeleitet werden kann. Vorzugsweise liegt der pH-Wert nach seiner Einstellung im Bereich von 4 bis 11, besonders bevorzugt im Bereich von 5 bis 10. Die Einstellung des pH-Wertes kann in einem oder in mehreren Schritten erfolgen.

Der Vorteil bei der Verwendung von CO₂ zur Einstellung des pH-Wertes liegt darin, dass auf diese Weise Natriumcarbonat oder Natriumhydrogencarbonat aus der alkalischen Mutterlauge gewonnen werden kann. Dabei kann das Natriumcarbonat oder das Natriumhydrogencarbonat über verschiedene kontinuierliche oder diskontinuierliche Verfahren zur Fest-/Flüssig-Trennung abgetrennt werden. Von den kontinuierlich arbeitenden Aggregaten sind beispielsweise Vakuum-Trommelfilter oder Vakuum-Bandfilter oder Zentrifugen besonders bevorzugt. Natriumcarbonat kann direkt wieder für die Herstellung von Alkalimetallchromaten oder -dichromaten über den oxidativen Aufschluss von Chromeisenstein eingesetzt werden. Im Fall von Natriumhydrogencarbonat kann dieses noch durch Glühung in Natriumcarbonat überführt werden und dann für die Herstellung von Alkalimetallchromaten oder -dichromaten über den oxidativen Aufschluss von Chromeisenstein eingesetzt werden. Das bei der Glühung von Natriumhydrogencarbonat zu Natriumcarbonat freiwerdende Kohlendioxid kann wieder in den Prozess zwecks pH-Erniedrigung zurückgeführt werden.

### Schritt c)

Das nach Schritt b) erhaltene ausgefallene Cr-haltige Hydrolyseprodukt, wird nun von der Mutterlauge abgetrennt. Für die Fest-/Flüssig-Trennung kennt der Fachmann eine Vielzahl von geeigneten Aggregaten und Verfahren. Es ist unerheblich, ob die Fest-/Flüssig-Trennung und die sich ggf. daran anschließende Wäsche kontinuierlich oder diskontinuierlich erfolgen. Ebenso ist es unerheblich, ob sie unter erhöhtem oder vermindertem Druck durchgeführt werden.

Bei den kontinuierlich arbeitenden Filtrations- und Waschaggregaten sind beispielsweise Vakuum-Trommelfilter oder Vakuum-Bandfilter besonders bevorzugt. Von den diskontinuierlich arbeitenden Filtrations- und Waschaggregaten werden Filterpressen besonders bevorzugt.

Das abgetrennte, vorzugsweise abfiltrierte Hydrolyseprodukt kann nun gewaschen werden oder - gegebenenfalls nach einer Trocknung - dem Schritt d) zugeführt werden. Für den Trocknungsschritt kennt der Fachmann eine Vielzahl von geeigneten Aggregaten. Es seien an dieser Stelle nur Kanal-, Band-, Etagen-, Walzen-, Trommel-, Röhren-, Schaufel-, Sprühtrockner (Zerstäubungstrockner mit Scheiben oder Düsen), Wirbelbetttrockner oder diskontinuierlich arbeitende Kammer-Horden-Trockner erwähnt. Vorzugsweise wird der feuchte Filterkuchen insbesondere ohne Wäsche direkt der Kalzinierung im Schritt d) zugeführt.

Das abgetrennte Hydrolyseprodukt kann aber auch ein- oder mehrstufig gewaschen werden. Die Wäsche kann direkt mit Wasser erfolgen. Um die Wasch- und Filtrationseigenschaften des erhaltenen Feststoffes zu verbessern, kann es vorteilhaft sein, den pH-Wert des Waschwassers zu erniedrigen. Das Waschwasser wird vorzugsweise vor oder während der Wäsche mit einer Säure umgesetzt, um den pH-Wert abzusenken. Dazu werden vorzugsweise anorganische Säuren oder organische Säuren oder Kohlendioxid eingesetzt, wie bereits oben beschrieben. Besonders bevorzugt werden organische Säuren, insbesondere organische niedermolekulare Säuren wie beispielsweise Ameisensäure oder Essigsäure, eingesetzt. Ganz besonders bevorzugt wird Kohlendioxid zur Einstellung des pH-Wertes eingesetzt, welches entweder unter Normaldruck oder unter erhöhtem Druck in das Waschwasser eingeleitet werden kann. Vorzugsweise liegt der pH-Wert des Waschwassers nach der Wäsche im Bereich von 4 bis 11, besonders bevorzugt im Bereich von 5 bis 10. Die Einstellung des pH-Wertes kann in einem oder in mehreren Schritten erfolgen.

Es kann auch vorteilhaft sein, wenn vor der Filtration oder vor der Wäsche Flockungsmittel oder Flockungshilfsmittel eingesetzt werden. Der Einsatz von organischen Flockungsmitteln oder Flockungshilfsmitteln ist besonders bevorzugt, weil sie bei der späteren Kalzinierung im Schritt d) durch Oxidation rückstandslos zersetzt werden und nicht als Verunreinigung im kalzinierten Produkt verbleiben. Bevorzugte Flockungsmittel sind anionische Polyelektrolyte zum Beispiel auf der Basis von Polyacrylat, Polyacrylamid, Polyethylenimin und Polyethylenoxid in unterschiedlicher Kettenlänge. Daneben können auch nichtionische synthetische und natürliche (beispielsweise Stärke oder Leim) Verbindungen als Flockungshilfsmittel eingesetzt werden.

Der nach erfolgter Trennung und ggf. erfolgter Wäsche erhaltene feuchte Filterkuchen des Hydrolyseproduktes kann entweder direkt der Kalzinierung gemäß Schritt d) zugeführt werden oder zuvor noch getrocknet werden. Für den Trocknungsschritt kennt der Fachmann eine Vielzahl von geeigneten Aggregaten, die bereits oben erwähnt wurden.

Wenn bei der Wäsche ebenfalls Kohlendioxid für die Erniedrigung des pH-Wertes eingesetzt wird, dann können die im Schritt c) erhaltenen Waschwässer ebenfalls zur Gewinnung von Natriumcarbonat oder Natriumhydrogencarbonat eingesetzt werden, wie bereits im Schritt b) beschrieben. Natürlich ist es auch möglich, die Mutterlauge aus Schritt b) und die Waschwässer aus Schritt c) zu vereinen und gemeinsam - gegebenenfalls nach einer Aufkonzentration - für die Gewinnung von Natriumcarbonat oder Natriumhydrogencarbonat einzusetzten. Grundsätzlich ist auch möglich, die beiden Teilströme vor der Vereinigung jeweils getrennt voneinander aufzukonzentrieren und für die Gewinnung von Natriumcarbonat oder Natriumhydrogencarbonat einzusetzen. Dieses Vorgehen birgt jedoch das Risiko, dass bei zu starkem Aufkonzentrieren aus der Mutterlauge bereits Natriumhydrogencarbonat auskristallisiert, da die Mutterlauge stets eine sehr hohe Natriumkonzentration aufweist.

### Schritt d)

Die thermische Behandlung bei erhöhter Temperatur, also die Kalzinierung, gemäß Schritt d) erfolgt bei einer Temperatur von 700 bis 1400 °C, besonders bevorzugt von 800 bis 1300 °C, vorzugsweise in einem Zeitraum von mehr als 20 Minuten, besonders bevorzugt von mehr als 30 Minuten, insbesondere 30 Minuten bis 4 Stunden. Für die Kalzinierung bei derart hohen Temperaturen kennt der Fachmann eine Vielzahl von geeigneten Apparaten. Es seien an dieser Stelle nur Ringherdöfen, Drehrohröfen, Wirbelbettreaktoren oder diskontinuierlich arbeitende Kammeröfen erwähnt. Vorzugsweise erfolgt die Kalzinierung in einem direkt beheizten Drehrohrofen. Die Verweilzeit des zu kalzinierenden Materials liegt je nach Ausgestaltung und Länge des Ofens vorzugsweise bei 30 Minuten bis 4 Stunden. Die Kalzinierung erfolgt vorzugsweise an Luft oder in einer Atmosphäre aus reinem Sauerstoff oder in einer Atmosphäre aus Luft, die mit Sauerstoff angereichert ist.

Das nach dem Schritt c) erhaltene und gegebenenfalls gewaschene Hydrolyseprodukt, das im Schritt d) kalzinert wird, neigt während der Kalzinierung nicht zum Kleben, so dass die Kalzinierung problemlos möglich ist.

In einer besonders bevorzugten Variante des erfindungsgemäßen Verfahrens werden vor der Kalzinierung ein oder mehrere Alkalimetallhalogenide oder Ammoniumhalogenide oder Erdalkalimetallhalogenide, insbesondere die Fluoride, Chloride, Bromide oder Iodide von Natrium oder Kalium oder Ammonium, oder Alkalimetallhydroxide, insbesondere Natriumhydroxid, oder Kaliumhydroxid, oder Chromsäure in einer Menge von 0.01 Gew.-% bis 3.0 Gew.-%, besonders bevorzugt von 0.02 Gew.-% bis 1.0 Gew.-%, bezogen auf das für die Kalzinierung eingesetzte Hydrolyseprodukt zugesetzt. Durch derartige Zusätze können die anwendungstechnischen Eigenschaften, insbesondere die Erhöhung der Schüttdichte des erhaltenen Chrom(III)-oxid beeinflusst werden. Bevorzugt ist es jedoch auf eine Zugabe solcher Additive während der Kalzinierung zu verzichten.

Das nach der Kalzierung gemäß Schritt d) erhaltene Chrom(III)-oxid wird vorzugsweise abgekühlt und gegebenenfalls gemahlen. In einer besonders bevorzugten Variante des erfindungsgemäßen Verfahrens wird das kalzinierte Produkt nach Schritt d) in Wasser suspendiert, wobei eine Mutterlauge entsteht und gegebenenfalls noch mit Wasser ein- oder mehrstufig gewaschen und anschließend wieder getrocknet. Dadurch können im Chrom(III)-oxid noch vorhandene wasserlösliche Verunreinigungen (wasserlösliche Salze) - im wesentlichen Alkalimetallchromat, beispielsweise Natriumchromat, welches durch Oxidation von Chrom(III)-oxid bei hohen Temperaturen entstanden ist - nach bekannten Verfahren ein- oder mehrstufig mit Wasser oder wässrigen Medien ausgewaschen und der Feststoff von der Flüssigkeit abgetrennt werden. Es gelten die bevorzugten Ausführungsformen für das Waschen wie sie unter Schritt c) bereits angegeben sind.

Das Chrom(III)-oxid verfügt in der Regel über gute Filtrations- und Wascheigenschaften, so dass die Einstellung des pH-Wertes oder der Zusatz eines Flockungsmittels oder Flockungshilfsmittels nicht mehr notwendig ist. Das nach der Fest-/Flüssig-Trennung erhaltene feuchte Chrom(III)-oxid wird anschließend noch getrocknet. Das getrocknete Chrom(III)-oxid wird dann vorzugsweise direkt abgefüllt oder gegebenenfalls vor der Abfüllung noch gemahlen.

Für die Trocknung können die bereits oben erwähnten Aggregate eingesetzt werden. Je nach gewähltem Trocknungsaggregat kann es erforderlich sein, dass sich noch ein Mahlschritt anschließt. Aber auch wenn keine Laugung, Wäsche und Trocknung des kalzinierten Produktes erfolgt ist, kann eine Mahlung vorteilhaft sein. Vorzugsweise wird das kalzinierte und gegebenenfalls in Wasser suspendierte und gewaschene und getrocknete Produkt noch einer Mahlung unterzogen. Hierzu sind Mahlaggregate unterschiedlicher Bauart geeignet, wie zum Beispiel Walzenmühlen, Kollergänge, Pendelmühlen, Hammermühlen, Stiftmühlen, Turbomühlen, Kugelmühlen oder Strahlmühlen. Wenn das kalzinierte Produkt gewaschen wurde, so kann besonders vorteilhaft ein Mahltrockner verwendet werden, bei dem die Trocknung und Mahlung in nur einem Arbeitsschritt erfolgt. Die Wahl des geeigneten Mahlaggregates richtet sich unter anderem nach dem jeweiligen Anwendungsgebiet für das hergestellte Chrom(III)-oxid.

Wenn das kalzinierte Chrom(III)-oxid gewaschen wird, so enthalten die jeweilige Mutterlauge und das Waschwasser in beiden Fällen im wesentlichen Alkalimetallchromat und/oder Alkalimetalldichromat. Diese beiden Wertstoffe können wieder in den Produktionsprozess zurückgeführt werden, indem sie beispielsweise wieder für die Herstellung von Alkalimetalldichromat oder beispielsweise eines Akalimetall-Ammoniumchromat-Doppelsalzes eingesetzt werden. Besonders bevorzugt werden Mutterlaugen und Waschwässer, welche bei der Wäsche des kalzinierten Produktes anfallen, wieder für die Herstellung von Alkalimetalldichromat oder beispielsweise eines Alkalimetall-Ammoniumchromat-Doppelsalzes eingesetzt.

Das nach dem erfindungsgemäßen Verfahren hergestellte Chrom(III)-oxid ist hochrein. Es eignet sich folglich hervorragend für metallurgische Zwecke wie die Herstellung von Chrommetall oder chromhaltigen Hochleistungslegierungen, insbesondere durch Reduktion in Gegenwart von Aluminiummetall über das aluminothermische Verfahren, und für die Herstellung von hochtemperaturbeständigen Werkstoffen, es kann aber auch als Farbpigment für pigmentäre Anwendungen eingesetzt werden, da es auch einen niedrigen Gehalt an wasserlöslichen Salzen aufweist. Ferner ist auch die Verwendung des nach dem erfindungsgemäßen Verfahren hergestellten Chrom(III)-oxids, als Farbpigment, Schleifmittel sowie als Ausgangsmaterial für die Herstellung von hochtemperaturbeständigen Werkstoffen, Chrommetall oder chromhaltigen Hochleistungslegierungen, insbesondere durch Reduktion in Gegenwart von Aluminiummetall über das aluminothermische Verfahren beschrieben. Das erfindungsgemäße Verfahren zur Herstellung von hochreinem, schwefelarmem Chrom(III)-oxid weist gegenüber den im Stand der Technik beschriebenen Verfahren einige wesentliche Vorteile auf. Ein Vorteil des erfindungsgemäßen Verfahrens ist, dass sich als Nebenprodukte Alkalimetallchromat und/oder Alkalimetalldichromat bilden, welche problemlos wieder in den Herstellungsprozess zurückgeführt werden können. Die bei der Hydrolyse entstehende stark alkalische Mutterlauge kann mit Kohlendioxid angesäuert werden und so entweder direkt in Natriumcarbonat überführt werden oder zuerst in Natriumhydrogencarbonat überführt werden, welches dann zu Natriumcarbonat kalziniert wird. Das Natriumcarbonat kann wieder für den oxidativen Aufschluss von Chromeisenstein zu Natriumchromat eingesetzt werden. Ein großer Vorteil gegenüber dem in CN 1907865A beschriebenen Verfahren ist, dass die Ausbeute verbessert ist und insbesondere für den Fall der pH-Erniedrigung die Ausbeute und Reinheit des erhaltenen Chromoxids weiter gesteigert werden können. Gleichzeitig gelingt es, den Na-Gehalt im Hydrolyseprodukt zu senken, was sich bei der anschließenden Kalzinierung als vorteilhaft erweist, weil bei einem niedrigeren Na-Gehalt weniger Cr(III) zu Chromat oxidiert und in Natriumchromat überführt wird. Daher liefert das erfindungsgemäße Verfahren deutlich höhere Ausbeuten an Chrom(III)-oxid. Das nach dem erfindungsgemäßen Verfahren anfallende Chrom(III)-oxid ist hochrein. Es ist per se schwefelarm, weil keine Schwefelverbindungen in den Produktionsprozess eingebracht werden. Des Weiteren ist es alkalimetallarm. Als "schwefelarm" im Sinne dieser Erfindung gelten Chrom(III)-oxide, die einen Schwefelgehalt von weniger als 200 ppm, vorzugsweise weniger als 50 ppm, ganz besonders bevorzugt weniger als 40 ppm, aufweisen. Als "alkalimetallarm" im Sinne dieser Erfindung gelten Chrom(III)-oxide, die einen Alkalimetallgehalt - gerechnet als Alkalimetall - von weniger als 1500 ppm, vorzugsweise weniger als 500 ppm, aufweisen.

Anhand der nachfolgenden Beispiele wird die Erfindung näher erläutet, ohne dass dadurch eine Einschränkung der Erfindung bewirkt werden soll.

### Beispiele

### Beispiel 1

60 g wasserfreies zerkleinertes Natriumdichromat Na₂Cr₂O₇ wurden in einen Glasbehälter mit Gaszu- und -ableitung mit Glasfritte eingebracht. Der Boden war komplett bedeckt und der Temperaturfühler tauchte ins Schüttgut ein. Der Glasbehälter wurde in einen geregelten Ofen eingebracht. Der Glasbehälter wurde unter Stickstoff auf 300 °C Manteltemperatur erhitzt. Der Stickstoff wurde bei 220 °C Innentemperatur in mäßigem Strom gegen Ammoniak ausgetauscht, welcher von unten durch das Produkt strömte. Nach 50 Minuten stieg die Innentemperatur durch exotherme Reaktion innerhalb weniger Minuten von 220 °C auf 371 °C an. Nach 60 Minuten wurde in 10 Minuten auf 400 °C Manteltemperatur zur Vervollständigung der Reaktion erhöht. Nach weiteren 6.5 Stunden wurde der Ammoniak wieder durch Stickstoff verdrängt und es wurde auf Raumtemperatur abgekühlt. Es wurden 50.3 g Reaktionsprodukt erhalten.

Das grob zerkleinerte Reaktionsprodukt wurde in 200 ml Wasser aufgeschlämmt und hydrolysiert. Die stark alkalische Suspension wurde mit Eisessig auf einen pH-Wert von 6 eingestellt, anschließend wurde über eine Filternutsche filtriert und der Filterkuchen ohne weitere Wäsche bei 120 °C getrocknet. Dann wurde er 2 Stunden bei 1250 °C geglüht. Das geglühte Chrom(III)-oxid wurde noch in Wasser suspendiert, mit Wasser gewaschen und schließlich bei 120 °C getrocknet.

Das auf diese Weise erhaltene Chrom(III)-oxid wies einen Na-Gehalt - gerechnet als Na-Metall - von 210 ppm auf. Die Ausbeute an Chrom(III)-oxid betrug 92% bezogen auf das im Ausgangsmaterial Na₂Cr₂O₇ vorhandene Chrom.

### Beispiel 2

Die Umsetzung von 60 g zerkleinertem Natriumdichromat Na₂Cr₂O₇ mit gasförmigen Ammoniak erfolgte wie im Beispiel 1 beschrieben.

Das zerkleinerte Reaktionsprodukt wurde in 200 ml Wasser aufgeschlämmt und hydrolysiert, wodurch sich eine Suspension mit einem pH-Wert von 14 ergab. Dann wurde Kohlendioxid unter Normaldruck in die Suspension eingeleitet, bis sich ein pH-Wert von 9.4 ergab, der nicht mehr weiter abgesenkt werden konnte. Dann wurde die Suspension kurzzeitig auf 95 °C erhitzt und über eine Filternutsche filtriert. Der Filterkuchen wurde erneut in 200 ml Wasser suspendiert und der pH-Wert der Suspension durch Einleiten von Kohlendioxid unter Normaldruck auf 7.7 eingestellt. Ein weiteres Absenken des pH-Wertes war nicht möglich. Dann wurde die Suspension erneut kurzzeitig auf 95 °C erhitzt und über eine Filternutsche filtriert. Der Filterkuchen wurde erneut in 200 ml Wasser suspendiert und der pH-Wert der Suspension durch Einleiten von Kohlendioxid unter Normaldruck auf 6.8 eingestellt. Ein weiteres Absenken des pH-Wertes war nicht möglich. Dann wurde die Suspension erneut kurzzeitig auf 95 °C erhitzt und über eine Filternutsche filtriert. Der Filterkuchen wurde bei 120 °C getrocknet. Anschließend wurde er 2 Stunden bei 1250 °C geglüht. Das geglühte Chrom(III)-oxid wurde noch in Wasser suspendiert, mit Wasser gewaschen und schließlich bei 120 °C getrocknet.

Das auf diese Weise erhaltene Chrom(III)-oxid weist einen Na-Gehalt - gerechnet als Na-Metall - von 130 ppm auf. Aus dem Cr-Gehalt ergab sich ein Reinheitsgrad von 98.9%. Die Ausbeute an Chrom(III)-oxid betrug 91% bezogen auf das im Ausgangsmaterial Na₂Cr₂O₇ vorhandene Chrom.

### Beispiel 3

Die Umsetzung von 60 g zerkleinertem Natriumdichromat Na₂Cr₂O₇ mit gasförmigem Ammoniak erfolgte wie im Beispiel 1 beschrieben.

Das auf eine Partikelgröße von weniger als 600 µm zerkleinerte Reaktionsprodukt wurde in 200 ml Wasser aufgeschlämmt und hydrolysiert. Dann wurden 2.0 g einer 0.1%igen wässrigen Lösung eines Flockungshilfsmittels (Copolymer aus Acrylamid und Natriumacrylat) zugesetzt. Nun wurde unter Rühren bei Raumtemperatur Kohlendioxid unter Normaldruck eingeleitet, bis sich ein pH-Wert von 9.9 einstellt. Ein weiteres Absenken des pH-Wertes war nicht möglich. Dann wurde die Suspension kurzzeitig aufgekocht und über eine Filternutsche filtriert. Der Filterkuchen wurde erneut in 200 ml Wasser suspendiert, 2.0 g der bereits oben erwähnten 0.1%igen wässrigen Lösung des Flockungshilfsmittels zugesetzt und der pH-Wert der Suspension durch Einleiten von Kohlendioxid unter Normaldruck auf 7.4 eingestellt. Dann wurde die Suspension erneut kurzzeitig aufgekocht und über eine Filternutsche filtriert. Der Filterkuchen wurde erneut in 200 ml Wasser suspendiert, 2.0 g der bereits oben erwähnten 0.1%igen wässrigen Lösung des Flockungshilfsmittels zugesetzt und der pH-Wert der Suspension durch Einleiten von Kohlendioxid unter Normaldruck auf 6.5 eingestellt. Dann wurde die Suspension erneut kurzzeitig aufgekocht und über eine Filternutsche filtriert. Der Filterkuchen wurde bei 120 °C getrocknet. Anschließend wurde er 2 Stunden bei 1250 °C geglüht. Das geglühte Chrom(III)-oxid wurde noch in Wasser suspendiert, mit Wasser gewaschen und schließlich bei 120 °C getrocknet.

Das auf diese Weise erhaltene Chrom(III)-oxid wies einen Na-Gehalt - gerechnet als Na-Metall - von 310 ppm auf. Aus dem Cr-Gehalt ergibt sich ein Reinheitsgrad von 99.7%. Die Ausbeute an Chrom(III)-oxid betrug 96% bezogen auf das im Ausgangsmaterial Na₂Cr₂O₇ vorhandene Chrom.

### Beispiel 4

Zerkleinertes Natriumchromit NaCrO₂ und zerkleinertes Natriumdichromat Na₂Cr₂O₇ werden in einem molaren Cr(III) : Cr(VI)-Verhältnis von 1 : 1 gemischt und unter Inertgas-Atmosphäre auf 350°C aufgeheizt. Nach einer Stunde wird die Temperatur mit 3 °C/min auf 450°C erhöht und noch 30 min bei 450 °C gehalten. Das erhaltene Reaktionsprodukt ist dunkelgrün. Gemäß einer Röntgenpulveraufnahme besteht es aus Chrom(III)-oxid und Natriummonochromat Na₂CrO₄:

2 NaCrO₂ + Na₂Cr₂O₇ → 2 Na₂CrO₄ + Cr₂O₃ (10)

Das Reaktionsprodukt wurde mit gasförmigen Ammoniak, welches als Mischung mit 13.6 vol-% Ammoniak und einem Inertgas, eingesetzt wurde bei 500 °C umgesetzt, wobei die Reduktion bereits ab ca. 350 °C in Gang kommt. Bei der Reduktion tritt ein Gewichtsverlust von 10.65% auf, was in guter Übereinstimmung mit der erwarteten Reaktion zur Bildung von Natriumchromit steht:

2 Na₂CrO₄ + Cr₂O₃ + 2 NH₃ → 4 NaCrO₂ + 3 H₂O + N₂ (11)

Das nach der Umsetzung mit Ammoniak gemäß Gleichung (11) erhaltene Natriumchromit NaCrO₂ kann wie in den Beispiele 1 bis 3 beschrieben aufgearbeitet werden.

### Vergleichsbeispiel 1 (ohne pH-Erniedrigung bei der Hydrolyse),

Die Umsetzung von 60 g zerkleinertem Natriumdichromat Na₂Cr₂O₇ mit gasförmigen Ammoniak erfolgte wie im Beispiel 1 beschrieben.

Das zerkleinerte Reaktionsprodukt wurde in 100 ml Wasser aufgeschlämmt und hydrolysiert, wodurch sich eine alkalische Suspension ergab. Dann wurde über eine Filternutsche filtriert und der Filterkuchen wurde erneut eine Stunde in 100 ml Wasser suspendiert und wieder über eine Filternutsche filtriert. Der Filterkuchen wurde bei 120 °C getrocknet und anschließend 2 Stunden bei 1250 °C geglüht. Das geglühte Chrom(III)-oxid wurde noch in Wasser suspendiert, mit Wasser gewaschen und schließlich bei 120 °C getrocknet.

Das auf diese Weise erhaltene Chrom(III)-oxid wies einen Na-Gehalt - gerechnet als Na-Metall - von 540 ppm auf. Die Ausbeute an Chrom(III)-oxid betrug 65%, bezogen auf das im Ausgangsmaterial Na₂Cr₂O₇ vorhandene Chrom.

### Vergleichsbeispiel 2 (gemäß CN-101475217 ohne pH-Erniedrigung bei der Hydrolyse),

Natriumdichromat Na₂Cr₂O₇ wurde, wie in CN-101475217 beschrieben, eine Stunde mit gasförmigen Ammoniak bei 350°C umgesetzt. Das erhaltene Reaktionsprodukt wurde abgekühlt und dreimal bei 80°C mit der angegebenen Waschwassermenge gewaschen. Nach Filtration wies der Feststoff einen Feuchtegehalt von 29% auf und wurde mit 2 Gew.-% eines äquimolaren Gemisches aus P₂O₃, Al₂O₃, ZnO, Sb₂O₃, BaO und TiO₂ vermischt und eine Stunde bei 1100°C geglüht. Anschließend wurde erneut mehrfach gewaschen, getrocknet und zerkleinert. Die Ausbeute an Chrom(III)-oxid betrug 44.6%, bezogen auf das im Ausgangsmaterial Na₂Cr₂O₇ vorhandene Chrom.

### Vergleichsbeispiel 3 (in Anlehnung an CN-101475217 ohne pH-Erniedrigung bei der Hydrolyse),

Natriumdichromat Na₂Cr₂O₇ wurde wie in Beispiel 1 beschrieben mit gasförmigen Ammoniak umgesetzt. Das erhaltene Reaktionsprodukt wurde abgekühlt und dann gemäß CN-101475217 wie im Vergleichsbeispiel 2 beschrieben weiter aufgearbeitet und umgesetzt. Die Ausbeute an Chrom(III)-oxid betrug 65%, bezogen auf das im Ausgangsmaterial Na₂Cr₂O₇ vorhandene Chrom.

## Patentansprüche

1. Verfahren zur Herstellung von Chrom(III)-oxid, enthaltend die Schritte:
a) Umsetzung von Alkalimetallchromat mit gasförmigem Ammoniak, insbesondere bei einer Temperatur von 200 bis 800 °C,
b) Hydrolyse des nach Schritt a) erhaltenen Reaktionsproduktes, wobei man den pH-Wert
• des Wassers zur Hydrolyse vor der Hydrolyse oder
• der alkalischen Mutterlauge während oder nach der Hydrolyse auf einen Wert von 4 bis 11, vorzugsweise von 5 bis 10,
mittels einer Säure erniedrigt,
c) Abtrennung des nach Schritt b) ausgefallenen Hydrolyseproduktes, vorzugsweise bei einem pH-Wert von 4 bis 11, insbesondere von 5 bis 10, und gegebenenfalls Waschen und gegebenenfalls Trocknen und
d) Kalzinieren des nach Schritt c) erhaltenen Hydrolyseproduktes bei einer Temperatur von 700 bis 1400 °C, insbesondere von 800 bis 1300 °C.

2. Verfahren gemäß Anspruch 1, **dadurch gekennzeichnet, dass** die Reaktion des Alkalimetallchromates mit gasförmigem Ammoniak in einem indirekt beheizten Reaktor, insbesondere in einem Drehrohrofen oder in einer Wirbelschicht erfolgt.

3. Verfahren gemäß Anspruch 1, **dadurch gekennzeichnet, dass** das Alkalimetallchromat Natriumdichromat, Natriumdichromat Dihydrat oder Kaliumdichromat ist.

4. Verfahren gemäß Anspruch 1, **dadurch gekennzeichnet, dass** die Erniedrigung des pH-Wertes durch den Zusatz von anorganischen oder organischen Säuren, insbesondere durch Einleiten von Kohlendioxid erfolgt.

5. Verfahren gemäß einem oder mehreren der Ansprüche 1 bis 4, **dadurch gekennzeichnet, dass** das kalzinierte Produkt nach Schritt d) in Wasser suspendiert gegebenenfalls noch mit Wasser ein- oder mehrstufig gewaschen und anschließend getrocknet wird.

6. Verfahren gemäß einem oder mehreren der Ansprüche 1 bis 5, **dadurch gekennzeichnet, dass** das nach Schritt d) kalzinierte und gegebenenfalls gewaschene und gegebenenfalls getrocknete Produkt einer Mahlung unterzogen wird.

7. Verfahren gemäß einem oder mehreren der Ansprüche 1 bis 6, **dadurch gekennzeichnet, dass** vor der Kalzinierung gemäß Schritt d) ein oder mehrere Alkalimetallhalogenide oder Ammoniumhalogenide oder Erdalkalimetallhalogenide, insbesondere die Fluoride, Chloride, Bromide oder Iodide von Natrium oder Kalium oder Ammonium, oder Alkalimetallhydroxide, insbesondere Natriumhydroxid, oder Kaliumhydroxid, oder Chromsäure in einer Menge von 0.01 Gew.-% bis 3.0 Gew.-%, insbesondere von 0.02 Gew.-% bis 1.0 Gew.-%, bezogen auf das für die Kalzinierung eingesetzte Produkt, zugesetzt werden.

## Claims

1. Process for preparing chromium(III) oxide, which comprises the steps:
a) reaction of alkali metal chromate with gaseous ammonia, in particular at a temperature of from 200 to 800°C,
b) hydrolysis of the reaction product obtained in step a) with the pH
• of the water for the hydrolysis being reduced before the hydrolysis or
• of the alkaline mother liquor being reduced during or after the hydrolysis, to a value of from 4 to 11, preferably from 5 to 10,
by means of an acid,
c) isolation of the hydrolysis product which has precipitated in step b), preferably at a pH of from 4 to 11, in particular from 5 to 10, and optionally washing and optionally drying and
d) calcination of the hydrolysis product obtained in step c) at a temperature of from 700 to 1400°C, in particular from 800 to 1300°C.

2. Process according to Claim 1, **characterized in that** the reaction of the alkali metal chromate with gaseous ammonia is carried out in an indirectly heated reactor, in particular in a rotary tube furnace or in a fluidized bed.

3. Process according to Claim 1, **characterized in that** the alkali metal chromate is sodium dichromate, sodium dichromate dihydrate or potassium dichromate.

4. Process according to Claim 1, **characterized in that** the lowering of the pH is carried out by addition of inorganic or organic acids, in particular by introduction of carbon dioxide.

5. Process according to one or more of Claims 1 to 4, **characterized in that** the calcined product from step d) is suspended in water, optionally washed again with water one or more times and subsequently dried.

6. Process according to one or more of Claims 1 to 5, **characterized in that** the calcined and optionally washed and optionally dried product from step d) is subjected to milling.

7. Process according to one or more of Claims 1 to 6, **characterized in that** one or more alkali metal halides or ammonium halides or alkaline earth metal halides, in particular the fluorides, chlorides, bromides or iodides of sodium or potassium or ammonium, or alkali metal hydroxides, in particular sodium hydroxide or potassium hydroxide, or chromic acid are added in an amount of from 0.01% by weight to 3.0% by weight, in particular from 0.02% by weight to 1.0% by weight, based on the product used for the calcination, before the calcination in step d).

## Revendications

1. Procédé de fabrication d'oxyde de chrome (III), contenant les étapes suivantes :
a) la mise en réaction d'un chromate de métal alcalin avec de l'ammoniac gazeux, notamment à une température de 200 à 800 °C,
b) l'hydrolyse du produit de réaction obtenu à l'étape a), le pH
- de l'eau pour l'hydrolyse avant l'hydrolyse ou
- de la liqueur mère alcaline pendant ou après l'hydrolyse
étant abaissé au moyen d'un acide à une valeur de 4 à 11, de préférence de 5 à 10,
c) la séparation du produit d'hydrolyse précipité à l'étape b), de préférence à un pH de 4 à 11, notamment de 5 à 10, et éventuellement le lavage et éventuellement le séchage, et
d) la calcination du produit d'hydrolyse obtenu à l'étape c) à une température de 700 à 1 400 °C, notamment de 800 à 1 300 °C.

2. Procédé selon la revendication 1, **caractérisé en ce que** la réaction du chromate de métal alcalin avec l'ammoniac gazeux a lieu dans un réacteur à chauffage indirect, notamment dans un four tubulaire rotatif ou dans un lit fluidisé.

3. Procédé selon la revendication 1, **caractérisé en ce que** le chromate de métal alcalin est le dichromate de sodium, le dichromate de sodium dihydraté ou le dichromate de potassium.

4. Procédé selon la revendication 1, **caractérisé en ce que** l'abaissement du pH a lieu par ajout d'acides inorganiques ou organiques, notamment par introduction de dioxyde de carbone.

5. Procédé selon une ou plusieurs des revendications 1 à 4, **caractérisé en ce que** le produit calciné de l'étape d) est suspendu dans de l'eau, éventuellement encorne lavé avec de l'eau en une ou plusieurs étapes, puis séché.

6. Procédé selon une ou plusieurs des revendications 1 à 5, **caractérisé en ce que** le produit calciné à l'étape d) et éventuellement lavé et éventuellement séché est soumis à un broyage.

7. Procédé selon une ou plusieurs des revendications 1 à 6, **caractérisé en ce qu'**un ou plusieurs halogénures de métaux alcalins ou halogénures d'ammonium ou halogénures de métaux alcalino-terreux, notamment les fluorures, chlorures, bromures ou iodures de sodium ou de potassium ou d'ammonium, ou des hydroxydes de métaux alcalins, notamment l'hydroxyde de sodium ou l'hydroxyde de potassium, ou l'acide chromique, sont ajoutés avant la calcination selon l'étape d) en une quantité de 0,01 % en poids à 3,0 % en poids, notamment de 0,02 % en poids à 1,0 % en poids, par rapport au produit utilisé pour la calcination.
